# EUROPÄISCHE PATENTANMELDUNG

(11) **EP 0 795 569 A1**
(43) Veröffentlichungstag der Anmeldung: **17.09.1997**
(21) Anmeldenummer: 97100842.0
(22) Anmeldetag: 21.01.1997
(51) Int. Cl.: C08G 18/79, C08G 18/32, C08G 18/80

(54) **Polyadditionsverbindungen aus disekundären Diaminen und aus Uretdiongruppen enthaltenden Polyisocyanat-Gemischen**

(30) Priorität: 16.03.1996 DE 19610465
(71) Anmelder: HÜLS AKTIENGESELLSCHAFT, 45764 Marl (DE)
(72) Erfinder: Wolf, Elmar, Dr., 45661 Recklinghausen (DE)

(57) **Zusammenfassung**

Uretdiongruppenhaltige Polyadditionsprodukte aus einem uretdiongruppenhaltigen Hexamethylendiisocyanat/Isophorondiisocyanat-Gemisch und disekundären Diaminen, erhältlich durch Umsetzung eines uretdiongruppenhaltigen Diisocyanat-Gemisches, das aus mindestens 40 Mol-% bis maximal 80 Mol-% uretdiongruppenhaltigem Isophorondiisocyanat besteht und mit disekundären Diaminen in einem NCO/NH-Verhältnis von 1:0,5 bis 1:0,9 bei Raumtemperatur bis 60 °C in einem gegenüber Isocyanaten inerten Lösemittel.

## Beschreibung

Die Erfindung betrifft neue Polyadditionsverbindungen aus disekundären Diaminen und aus Uretdiondiisocyanaten bestehenden Polyisocyanat-Gemischen auf Basis von Hexamethylendiisocyanat (HDI) und Isophorondiisocyanat (IPDI).

In der DE-OS 30 30 572 werden uretdiongruppenhaltige Polyadditionsprodukte beschrieben, die zur Herstellung von blockierungsmittelfreien PUR-Pulvern inzwischen wirtschaftliche Bedeutung erlangt haben. Bei diesen in der DE-OS 30 30 572 beanspruchten Verbindungen handelt es sich um Polyadditionsverbindungen aus einem isocyanuratgruppenfreien uretdiongruppenhaltigen Isophorondiisocyanat und Diolen, wobei das so erhaltene Additionsprodukt gegebenenfalls ganz oder teilweise mit Monoalkoholen bzw. Monoaminen umgesetzt wird.

Entsprechende Polyadditionsprodukte auf Basis eines NCO-Gruppen enthaltenden Uretdions des Hexamethylendiisocyanats (im folgenden als HDI-Uretdion abgekürzt) sind, wie in der EP 0 478 990 (S. 2, Zeilen 38 - 40) beschrieben, nicht möglich.

Solche Produkte wurden eine willkommene Bereicherung der bereits vorhandenen PUR-Pulverhärter darstellen, da mit ihnen auf einfache Weise eine Maßschneiderung hinsichtlich der Flexibilität bei PUR-Pulvern ermöglicht wurde.

Aufgabe der vorliegenden Erfindung war somit, als PUR-Pulverhärter geeignete Polyadditionsverbindungen auf Basis von HDI-Uretdion bereitzustellen.

Diese Aufgabe konnte mit den nachstehend beschriebenen erfindungsgemäßen Polyadditionsverbindungen gelöst werden.

Gegenstand der vorliegenden Erfindung sind somit uretdiongruppenhaltige Polyadditionsprodukte aus einem uretdiongruppenhaltigen Hexamethylendiisocyanat/Isophorondiisocyanat-Gemisch und disekundären Diaminen, erhältlich durch Umsetzung eines uretdiongruppenhaltigen Diisocyanat-Gemisches, das aus mindestens 40 Mol-% bis maximal 80 Mol-% uretdiongruppenhaltigem Isophorondiisocyanat besteht und mit disekundären Diaminen in einem NCO/NH-Verhältnis von 1:0,5 bis 1:0,9 bei Raumtemperatur bis 60 °C in einem gegenüber Isocyanaten inerten Lösemittel.

Das erfindungsgemäß eingesetzte uretdiongruppenhaltige Diisocyanat-Gemisch besteht aus mindestens 40 Mol-% und maximal 80 Mol-% uretdiongruppenhaltigem Isophorondiisocyanat (im folgenden IPDI-Uretdion abgekürzt) und maximal 60 Mol-% und minimal 20 Mol-% HDI-Uretdion, bevorzugt aus 50 Mol-% IPDI-Uretdion und 50 Mol-% HDI-Uretdion.

Das IPDI-Uretdion wird gemäß der Lehre der DE-OS 37 39 549 hergestellt; es enthält ≤ 1 % IPDI und 17 - 18 % NCO, wobei nach dem Erhitzen auf 180 °C (1 h) der NCO-Gehalt 37,6 % beträgt. Das HDI-Uretdion wird entsprechend der Lehre der DE-OS 16 70 720 hergestellt; es enthält ≤ 1 % HDI und 22 - 23 % NCO, wobei nach dem Erhitzen auf 180 °C (1 h) der NCO-Gehalt 35 - 36 % beträgt. Während das IPDI-Uretdion selbst hergestellt wurde, wurde bei HDI-Uretdion ein auf dem Markt erhältliches Produkt (DESMODUR N 3400 der Fa. Bayer) eingesetzt.

Die Umsetzung des IPDI/HDI-Uretdions mit dem disekundären Diamin erfolgt in Lösung, bevorzugt bei Raumtemperatur. Zu dem gelösten IPDI/HDI-Uretdion wird das disekundäre Diamin bei Raumtemperatur in den angegebenen Mengenverhältnissen portionsweise so zugegeben, daß die Temperatur der Reaktionsmischung 40 °C nicht übersteigt. Nach Beendigung der Diaminzugabe ist die Reaktion beendet, und für den Fall, daß die Reaktionsprodukte freie NCO-Gruppen enthalten, erfolgt die Entfernung des Lösemittels, in der Regel handelt es sich um Aceton, durch Abdestillieren in Abdampfschnecken, Filmtrudern oder auch Sprühtrocknern. Sollen die freien NCO-Gruppen der Reaktionsprodukte ganz oder teilweise mit Monoaminen umgesetzt werden, erfolgt die Monoaminzugabe bei Raumtemperatur sofort nach der Kettenverlängerung mit dem disekundären Diamin. Nach der Monoaminzugabe wird das Lösemittel wie bereits beschrieben entfernt. Man kann aber auch umgekehrt vorgehen, d. h. also zuerst die Zudosietung des Monoamins und anschließend die Zugabe des disekundären Diamins. Als besonders vorteilhaft hat es sich erwiesen, die Amine zusammen als Gemisch dem IPDI/HDI-Uretdion zuzugeben. Sollen die freien NCO-Gruppen der Reaktionsprodukte ganz oder teilweise mit Monoalkoholen umgesetzt werden, wird nach Beendigung der Diaminzugabe der Monoalkohol dem Reaktionsgemisch zugegeben und so lange bei 60 °C erhitzt, bis pro eingesetztes OH-Äquivalent 1 NCO-Äquivalent reagiert hat. Die Entfernung des Lösemittels erfolgt wie bereits beschrieben.

Bei den erfindungsgemäß einzusetzenden Diaminen handelt es sich um disekundäre Diamine, die in zwei Stufen hergestellt werden, wobei in der 1. Stufe ein aliphatisches oder (cyclo)aliphatisches Diamin mit zwei primären Aminogruppen mit einem Aldehyd oder Keton zur Schiffschen Base kondensiert wird, und in der 2. Stufe die Hydrierung der Schiffschen Base erfolgt. Für die Kondensation zur Schiffschen Base kommen grundsätzlich alle aliphatischen und (cyclo)aliphatischen Diamine, wie z. B. Ethylendiamin, 1.2-Diaminopropan, 2-Methylpentamethylendiamin, Hexamethylendiamin, 2.2.4(2.4.4)-Trimethylhexamethylendiamin, Isophorondiamin (IPD), 1.2-Diaminocyclohexan sowie 1.3-Bis(aminomethyl)-benzol, in Frage.

Für die Herstellung der Schiffschen Base einzusetzende Carbonylverbindung kommen grundsätzlich alle aliphatischen und (cyclo)aliphatischen Aldehyde und Ketone in Frage; bevorzugt werden jedoch Isobutyraldehyd, 2-Ethylhexanal, Methylethylketon, Methylisobutylketon, Diisobutylketon, Cyclohexanon und 3.5.5-Trimethylcyclohexanon eingesetzt. Eine besonders vorteilhafte Variante des erfindungsgemäßen Verfahrens besteht darin, disekundäre Diamine einzusetzen, wie sie durch Reaktion von diprimären Diaminen mit Acrylsäureestern, wie z. B. Acrylsäuremethyl-, -ethyl-, -butyl-, -2-ethylhexylester, erhalten werden.

Die Umsetzung des Diamins mit dem Acrylsäureester erfolgt bei 60 -80 °C im Molverhältnis 1:2.

Ein weiterer Gegenstand der vorliegenden Erfindung sind Polyadditionsprodukte aus einem uretdiongruppenhaltigen Hexamethylendiisocyanat/Isophorondiisocyanat-Gemisch und disekundären Diaminen, die ganz oder teilweise mit Monoalkoholen und/oder Monoaminen blockiert sind.

Für die Endblockierung der freien NCO-Gruppen der erfindungsgemäß hergestellten Polyadditionsverbindungen kommen grundsätzlich alle aliphatischen und (cyclo)aliphatischen Monoalkohole sowie Monoamine in Frage; bevorzugt eingesetzt werden n-Butanol, 2-Ethylhexanol, Butylamin, Hexylamin, 2-Ethylhexylamin, Dibutylamin und Dihexylamin.

Bei den erfindungsgemäßen Polyadditionsprodukten, nämlich
1. Addukten mit endständigen freien NCO-Gruppen;
2. solche, deren NCO-Gruppen ganz oder teilweise mit Monoalkoholen oder Monoaminen umgesetzt sind
handelt es sich im allgemeinen um Verbindungen des Molekulargewichtsbereiches von 1 200 - 10 000, vorzugsweise 2 500 - 6 500. Die Polyadditionsprodukte weisen einen Schmelzpunkt von 70 - 150 °C, vorzugsweise 80 - 130 °C, auf; ihr latenter NCO-Gehalt, der NCO-Gehalt, der beim Erhitzen entsteht, beträgt 8 - 18 %, vorzugsweise 10 - 16 %.

Die erfindungsgemäßen Verbindungen eignen sich insbesondere als Härter für Zerewittinoff-aktive Wasserstoffatome aufweisende höherfunktionelle (thermoplastische) Verbindungen. In Kombination mit derartigen Verbindungen bilden die erfindungsgemäßen Polyadditionsprodukte oberhalb 160 °C, vorzugsweise 180 °C, zu hochwertigen Kunststoffen aushärtbare Systeme. Das bedeutendste Anwendungsgebiet für derartige Systeme ist ihre Verwendung für PUR-Pulverlacke.

### Experimenteller Teil

### A) Herstellung der Ausgangsverbindungen für die erfindungsgemäßen Verbindungen

### 1. NCO-Komponente

Für die Herstellung mit den disekundären Diaminen wurde ein IPDI/HDI-Uretdion-Gemisch aus:
a) 1 NCO-Äquivalent IPDI-Uretdion, das gemäß dem in der DE-OS 37 39 549 beanspruchten Verfahren hergestellt wurde und einen NCO-Gehalt von 17,6 % besaß; nach dem Erhitzen auf 180 °C (1 h) betrug der NCO-Gehalt 37,5 %.
b) 1 NCO-Äquivalent HDI-Uretdion (DESMODUR N 3400) mit einem NCO-Gehalt von 22 %; nach dem Erhitzen auf 180 °C (1 h) betrug der NCO-Gehalt 36 %.
eingesetzt.

Das Molgewicht des HDI/IPDI-Uretdion-Gemisches in der nachfolgenden Tabelle ist die Summe der beiden NCO-Äquivalente (Def.; 429).

### 2. Herstellung des disekundären Diamins

### Allgemeine Herstellungsvorschrift

Die Herstellung der N.N'-disubstituierten Diamine erfolgt in zwei Stufen:

In der 1. Stufe wird unter intensivem Rühren der Aldehyd oder das Keton so zum Diamin (Molverhältnis 2:1) zugetropft, daß die Temperatur des Reaktionsgemisches nicht über 40 °C steigt. Nach erfolgter Aldehyd- bzw. Ketonzugabe wird noch 1 h lang bei 40 °C gerührt. Anschließend wird die wäßrige Phase von der organischen abgetrennt. Zur Abtrennung des Restwassers wird die organische Phase bei 60 °C und 10 mbar so lange erhitzt, bis kein H₂O mehr übergeht. In der 2. Stufe erfolgt die Hydrierung der Di-Schiffschen Base an einem Co-Kontakt bei 125 °C und 300 bar. Anschließend wird das Rohprodukt destilliert.

| **Ausgangsverbindungen** | | | **Reaktionsprodukt** | |
|---|---|---|---|---|
| **Beispiel- Nr.** | **Diamin** | **Carbonyl-Komponente** | **Amingehalt [mmol/g]** | **Reinheit (GC)** |
| 1 | TMD | Diisobutylketon | 4,9 | > 98 |
| 2 | TMD | Methylisobutylketon | 6,4 | > 99 |
| 3 | IPD | i-Butyraldehyd | 7,1 | > 98 |
| 4 | IPD | Methylisobutylketon | 5,9 | > 98 |

### B) Herstellung der erfindungsgemäßen Verbindungen

### Allgemeine Herstellungsvorschrift

Zu der acetonischen Lösung (ca. 50 %) des IPDI/HDI-Uretdion-Gemisches wird bei Raumtemperatur das disekundäre Diamin unter intensivem Rühren so zudosiert, daß die Temperatur der Reaktionslösung 40 °C nicht übersteigt. Nach Beendigung der Diamirzugabe ist die Reaktion praktisch beendet, und es erfolgt die Acetonentfernung. Sollen die freien NCO-Gruppen des HDI/IPDI-Uretdion/Diamin-Additionsproduktes (Molverhältnis: HDI/IPDI-Uretdion:Diamin = (n+1):n) mit Monoaminen blockiert werden, so erfolgt im Anschluß an die Diaminzugabe sofort die Zugabe des Monoamins. Nach beendeter Monoaminzugabe wird das Aceton entfernt.

Sollen die freien NCO-Gruppen des HDI/IPDI-Uretdion/Diamin-Additionsproduktes mit Monoalkoholen blockiert werden, so hat sich folgende Verfahrensweise als vorteilhaft erwiesen:

Nach beendeter Diaminzugabe erfolgt die Zugabe des Monoalkohols sowie von 0,05 Gew.-% DBTL (bez. auf die Lösung); es wird so lange bei 60 °C erhitzt, bis pro OH-Äquivalent ein NCO-Äquivalent umgesetzt ist.

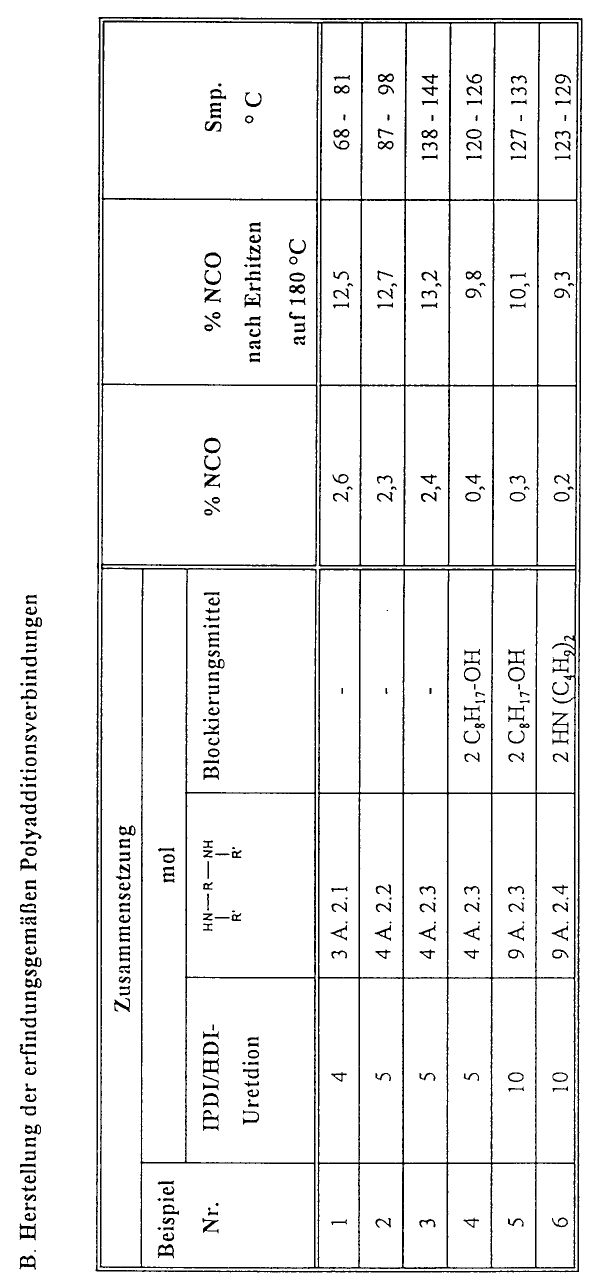

## Patentansprüche

1. Uretdiongrupperhaltige Polyadditionsprodukte aus einem uretdiongruppennhaltigen Hexamethylendiisocyanat/Isophorondiisocyanat-Gemisch und disekundären Diaminen, erhältlich durch Umsetzung eines uretdiongruppenhaltigen Diisocyanat-Gemisches, das aus mindestens 40 Mol-% bis maximal 80 Mol-% uretdiongruppenhaltigem Isophorondiisocyanat besteht und mit disekundären Diaminen in einem NCO/NH-Verhältnis von 1:0,5 bis 1:0,9 bei Raumtemperatur bis 60 °C in einem gegenüber Isocyanaten inerten Lösemittel.

2. Uretdiongruppenhaltige Polyadditionsverbindungen gemäß Anspruch 1,
dadurch gekennzeichnet,
daß das Polyadditionsprodukt gegebenenfalls ganz oder teilweise mit Monoalkoholen und/oder Monoaminen blockiert ist.

3. Uretdiongruppenhaltige Polyadditionsverbindungen gemäß den Ansprüchen 1 bis 2,
dadurch gekennzeichnet,
daß disekundäre Amine, erhalten durch Kondensation von Ethylendiamin, 1.2-Diaminopropan, 2-Methylpentamethylendiamin, Hexamethylendiamin, 2.2.4(2.4.4)-Trimethylhexamethylendiamin, Isophorondiamin (IPD), 1.2-Diaminocyclohexan odere 1.3-Bis(aminomethyl)-benzol mit Isobutyraldehyd, 2-Ethylhexanal, Methylethylketon, Methylisobutylketon, Diisobutylketon, Cyclohexanon oder 3.5.5-Trimethylcyclohexanon und anschließender Hydrierung der Schiffschen Base, eingesetzt werden.

4. Uretdiongruppenhaltige Polyadditionsverbindungen gemäß den Ansprüchen 1 bis 2,
dadurch gekennzeichnet,
daß disekundäre Diamine, erhältlich durch Reaktion von diprimären Diaminen mit Acrylsäureestern, eingesetzt werden.

5. Uretdiongruppenhaltige Polyadditionsverbindungen nach Anspruch 4,
dadurch gekennzeichnet,
daß Acrylsäuremethyl-, -ethyl-, -butyl-, -2-ethylhexylester, eingesetzt werden.

6. Uretdiongruppenhaltige Polyadditionsverbindungen nach den Ansprüchen 1 bis 5,
dadurch gekennzeichnet,
daß sie Molekulargewichtsbereiche von 1 200 - 10 000, vorzugsweise 2 500 - 6 500, einen Schmelzpunkt von 70 - 150 °C, vorzugsweise 80 - 130 °C, und latente NCO-Gehalte von 8 - 18 %, vorzugsweise 10 - 16 %, aufweisen.

7. Uretdiongruppenhaltige Polyadditionsverbindungen nach den Ansprüchen 1 bis 6,
dadurch gekennzeichnet,
daß als Blockierungsmittel n-Butanol, 2-Ethylhexanol, Butylamin, Hexylamin, 2-Ethylhexylamin, Dibutylamin und Dihexylamin, eingesetzt werden.

8. Verfahren zur Herstellung von uretdiongruppenhaltigen Polyadditionsprodukten aus einem uretdiongruppenhaltigen Hexamethylendiisocyanat/Isophorondiisocyanat-Gemisch und disekundären Diaminen,
dadurch gekennzeichnet,
daß das uretdiongruppenhaltige Diisocyanat-Gemisch aus mindestens 40 Mol-% bis maximal 80 Mol-% uretdiongruppenhaltigem Isophorondiisocyanat besteht und mit disekundären Diaminen in einem NCO/NH-Verhältnis von 1:0,5 bis 1:0,9 bei Raumtemperatur bis 60 °C in einem gegenüber Isocyanaten inerten Lösemittel umgesetzt wird, und man das so erhaltene Polyadditionsprodukt gegebenenfalls ganz oder teilweise mit Monoalkoholen und/oder Monoaminen umsetzt.

9. Verwendung der Polyadditionsverbindungen gemäß den Ansprüchen 1 bis 7 als Härter für Zerewittinoff-aktive Wasserstoffatome aufweisende, mindestens difunktionelle Verbindungen.

10. Verwendung der Polyadditionsverbindungen gemäß den Ansprüchen 1 bis 7 für Polyurethan-Pulverlacke.
